Europäisches Patentamt

(19) European Patent Office　(11) Publication number: **0 283 287**
**B1**
Office européen des brevets

(12) **EUROPEAN PATENT SPECIFICATION**

(45) Date of publication of patent specification: **30.01.91** '　(51) Int. Cl.⁵: **F 04 D 19/04, H 02 K 7/11**

(21) Application number: **88302341.8**

(22) Date of filing: **17.03.88**

(54) **Pump.**

<table>
<tr><td>

(30) Priority: **18.03.87 JP 63282/87**

(43) Date of publication of application:
**21.09.88 Bulletin 88/38**

(45) Publication of the grant of the patent:
**30.01.91 Bulletin 91/05**

(84) Designated Contracting States:
**DE FR GB IT**

(56) References cited:
**DE-A-1 933 031
DE-A-2 354 046
DE-C- 890 561**

**SOVIET INVENTIONS ILLUSTRATED, week
8401, section P/Q, abstract no. 84-004833/01,
Derwent Publications Ltd, London, GB; & SU-A-
1 000 602 (BASHKIR OIL IND.) 05-03-1983**

**PATENT ABSTRACTS OF JAPAN, vol. 12, no.
260 (M-720)3107r, 21st July 1988; & JP-A-63 41
695 (SEIKO SEIKI CO., LTD) 22-02-1988**

</td><td>

(73) Proprietor: **SEIKO SEIKI KABUSHIKI KAISHA
3-1, Yashiki 4-chome
Narashino-shi Chiba (JP)**

(72) Inventor: **Miki, Masaharu Seiko Seiki Kabushiki
Kaisha
3-1 Yashiki 4-chome
Narashino-shi Chiba-ken (JP)**

(74) Representative: **Miller, Joseph et al
J. MILLER & CO. Lincoln House 296-302 High
Holborn
London WC1V 7JH (GB)**

(56) References cited:
**SOVIET INVENTIONS ILLUSTRATED, week K03,
2nd March 1983, section P/Q, abstract no.
A9264K/03, Derwent Publications Ltd, London,
GB; & SU-A-909 324 (KEMENOV VN) 10-03-1982**

</td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a pump, e.g. a vacuum pump which can produce a high degree of vacuum or ultra high vacuum.

In order to obtain ultra high vacuum it has previously been necessary to provide an oil-sealed rotary vacuum pump in addition to a turbo molecular pump. This means that a wide area is required for pump installation and vacuum can be adversely affected by a migration of oil from the oil-sealed rotary vacuum pump back towards an inlet port.

In Derwent Publication No. 84-00833/01 and SU-A-1,002,602 there is disclosed a pump comprising a housing within which a first rotor and a second rotor are rotatably mounted successively of each other so as to be adapted to effect successive pumping of a fluid, drive means being arranged to effect direct drive of one only of the rotors, there being clutch means operable to effect and disconnect a drive connection between the rotors.

According, therefore, to the present invention there is provided a pump comprising a housing within which a first rotor and a second rotor are rotatably mounted successively of each other so as to be adapted to effect successive pumping of a fluid, drive means arranged to effect direct drive of one only of the rotors, and clutch means operable to effect and disconnect a drive connection between the rotors, characterised in that the clutch means comprise mutually attracting magnetic means on the first and second rotors for magnetically coupling the rotors, and electromagnets on the first and second rotors, the electromagnets, when energized, repelling each other so as to be adapted to de-activate the said magnetic coupling.

Preferably, the pump is a vacuum pump in which, when the clutch means are engaged, the pump is operable to effect pumping to a higher degree of vacuum than when the clutch means are disengaged.

The present invention thus enables one to provide an oil-free vacuum pump, which can give a high degree of vacuum by itself at low cost without requiring a wide installation area.

Preferably, magnetic suspension means are provided for magnetically suspending the first and second rotors.

The magnetic means may comprise permanent magnets on adjacent parts of the first and second rotors.

Thus the permanent magnets may be disc magnets having respectively adjacent faces with grooves therein.

Alternatively, the magnetic means may comprise electromagnets.

The magnetic suspension means may comprise electromagnets for positioning the rotors radially and axially, and position sensors for sensing the axial and radial positions of the rotors.

There may be a revolution sensor for detecting the rotational speed of the rotor which is not directly driven by the drive means, control means being provided for completely de-energizing the electromagnets when the said rotational speed is at a predetermined value.

The first set of rotor blades may thus be disconnected from the second set of rotor blades during pump operation in a low to high vacuum range, and the first set of rotor blades may be connected to the second set of rotor blades during pump operation in an ultra high vacuum range. Therefore, pump operation can be continuously carried out by one vacuum pump from a low vacuum range (e.g. atmospheric pressure) to an ultra high vacuum range.

The invention is illustrated, merely by way of example, in the accompanying drawings, in which:-

Figure 1 is a half cross-section of a vacuum pump according to the present invention,

Figure 2 is a side elevation of a magnetic arrangement which may be used in a vacuum pump according to the present invention, and

Figure 3 is a block diagram showing a control apparatus for the vacuum pump shown in Figure 1.

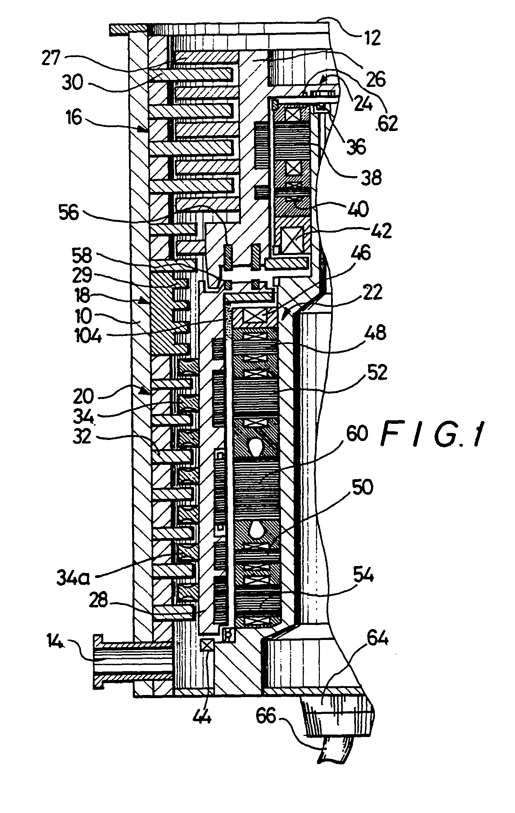

Referring to Figure 1, a vacuum pump for producing ultra high vacua has an inlet port 12 and an outlet port 14 which are respectively provided at the top side and the bottom side of an outer cylinder or housing 10 of the pump.

The interior of the pump body is divided, in a direction from the inlet port 12 to the outlet port 14, into a turbo molecular pump portion 16, a stationary helical groove portion 18 and a centrifugal blade portion 20. The turbo molecular pump portion 16 is provided for ultra high vacuum, the stationary helical groove portion 18 is for high to intermediate vacuum, and the centrifugal blade portion 20 is for low vacuum.

A rotor 24, which is supported by a tower or cylindrical support 22 within the outer cylinder 10, is divided into a first internal cylinder or a first rotor 26 for the turbo molecular pump portion 16, and a second internal cylinder or a second rotor 28 for the stationary helical groove portion 18 and the centrifugal blade portion 20. The first rotor and the second rotor are mounted coaxially within the housing 10 but can rotate independently of each other.

Multiple stage rotor blades 27 for producing ultra high vacua are provided around the external periphery of the first internal cylinder 26. They are disposed alternately with stator blades 30 provided on the internal periphery of the housing 10. A stationary helical flow groove 29 is provided on the internal periphery of the housing 10 which faces the external periphery of the top end of the second internal cylinder 28. Stator blades 32 are provided in plural stages on the inner periphery of the housing 10 and under the stationary helical flow groove 29. On the outer periphery of the second internal cylinder 28 there are provided multiple stage centrifugal blades 34 for producing low and high vacua, the blades 34 being provided alternately with the stator blades 32.

The first internal cylinder 26 and the second internal cylinder 28 are magnetically suspended. In order to provide for such magnetic suspension, there are provided a position sensor 36, which is mounted on the tower 22, for detecting axial displacement of the first internal cylinder 26; a radial direction electromagnet 38 for controlling radial direction displacement of the first internal cylinder 26; a position sensor 40 for detecting radial direction displacement of the first internal cylinder 26; an axial direction electromagnet 42 for controlling axial direction displacement of the first internal cylinder 26; a position sensor 44 for detecting axial displacement of the second internal cylinder 28; an axial direction electromagnet 46 for controlling axial direction displacement of the second internal cylinder 28; position sensors 48 and 50 for detecting radial direction displacement of the second internal cylinder 28; and radial direction electromagnets 52 and 54 for controlling radial direction displacement of the second internal cylinder 28.

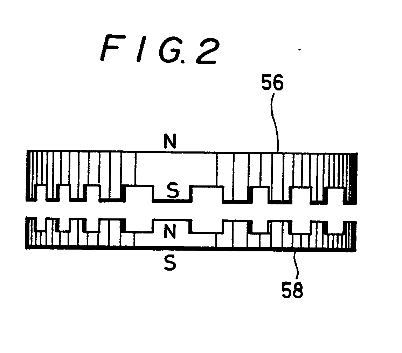

In the bottom end face of the first internal cylinder 26 and in the top end face of the second internal cylinder 28 there are respectively provided permanent magnets 56 and 58 which attract each other. As shown in Figure 2, disk permanent magnets having grooves provided on the sides which face each other can also be used for the above-mentioned permanent magnets.

A motor 60 for rotatably driving the second internal cylinder 28 is mounted on the periphery of the lower portion of the tower 22. The electromagnets 42, 46 are arranged, when energized, to repel each other while, as stated above, the permanent magnets 56, 58 are arranged to attract each other. The electromagnets 42, 46, when energized, are more powerful than the permanent magnets 56, 58 so that, when the electromagnets 42, 46 are de-energized, the first and second rotors 26, 28 are magnetically coupled together for rotation as a unit, and when the electromagnets 42, 46 are energized, the drive transmitted by the motor 60 to the second rotor 28 is not transmitted to the first rotor 26.

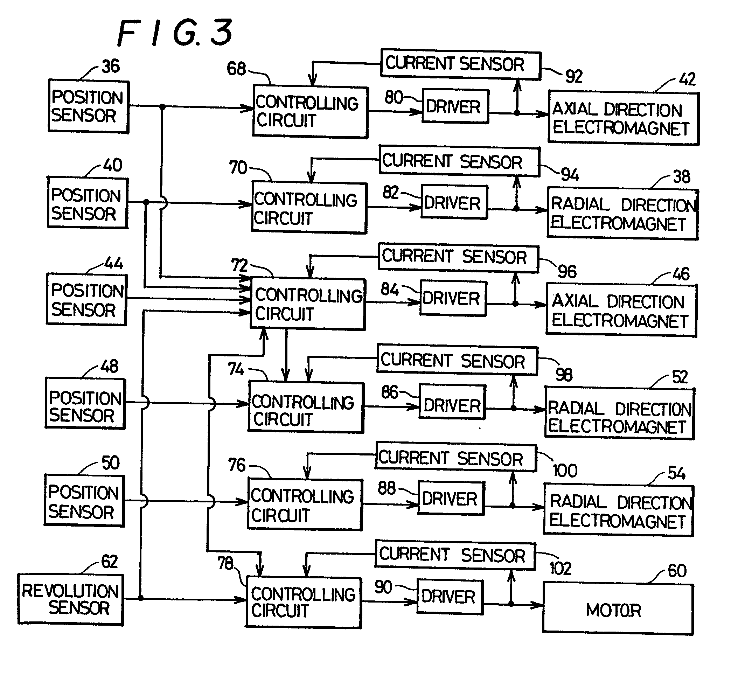

At the top end of the tower 22 there is provided a revolution sensor 62 for detecting rotation of the first external cylinder 26. Through a connector 64 and cables 66 provided at the bottom of the pump body, the position sensor 36, axial direction electromagnet 42, position sensor 40, radial direction electromagnet 38, position sensor 44, axial direction electromagnet 46, position sensor 48, position sensor 50, radial direction electromagnet 52, radial direction electromagnet 54, motor 60 and revolution sensor 62 are connected to a control equipment as shown in Figure 3.

Referring to Figure 3, detected signals from the position sensors 36, 40, 44, 48 and 50 and the revolution sensor 62 are fed respectively to controlling circuits 68, 70, 72, 74, 76 and 78, and the controlling signals therefrom are respectively fed to drivers 80, 82, 84, 86, 88 and 90. Further, the electromagnets 38, 42, 46, 52 and 54 and the motor 60 are driven by drivers 80, 82, 84, 86, 88 and 90. Driving currents thereof are detected by sensors 92, 94, 96, 98, 100 and 102.

When the pump operation is started by feeding power to the control equipment, currents passing through the electromagnets 42, 38 and 54 are respectively controlled by the controlling circuits 68, 70 and 76 according to detected signals from the position sensors 36, 40 and 50. Consequently, the first internal cylinder 26 and the second internal cylinder 28 which are coupled together by the permanent magnets 56 and 58 are magnetically suspended. While they are magnetically suspended, the controlling circuit 72 controls current passing through the axial direction electromagnet 46 in response to detected signals from the position sensor 44 for detaching the second internal cylinder 28 from the first internal cylinder 26 against the force of attraction acting between the permanent magnets 56 and 58.

At the same time, current passing through the radial direction electromagnet 52 is controlled by the controlling circuit 74 in response to detected signals from the position sensor 48 to stabilize the position of the second internal cylinder 28. On receiving the signal from the controlling circuit 72 of the detachment of the first internal cylinder 26, the controlling circuit 78 starts control of the rotation of the motor 60.

When the rotation is started, since the first internal cylinder 26 is suspended while detached from the second internal cylinder 28, only the second internal cylinder 28 is driven by the motor 60. At this stage, since the pump interior is at atmospheric pressure, pump operation is mainly carried out by the centrifugal blades 34 and the stator blades 32. When the rotational speed of the motor 60 is increased by the controlling circuit 78, the stationary helical groove 29 starts functioning to thereby further increase the degree of vacuum.

When the controlling circuit 78 confirms in accordance with the driving current to the motor 60 as detected by the sensor 102, that the pressure at the inlet port 12 has become $10^{-3}$ torr or below, this information is transmitted to the controlling circuit 72. The controlling circuit 72 controls the current passing through the axial direction electromagnet 46 so that the rotational speed of the first internal cylinder 26 as detected by the revolution sensor 62 becomes closer to the rotational speed of the second internal cylinder 28 under the command of the controlling circuit 78. That is to say, the current is gradually decreased to narrow the gap between the permanent magnets 56 and 58 so that the rotational force of the second cylinder 28 is transmitted to the first cylinder 26. For the transmission of the rotational force, eddy currents generated within the first cylinder 26 by the rotation of the permanent magnet 58 may also be used in addition to the magnetic attraction acting between the permanent magnets 56 and 58. It should be noted that electromagnets can also be used instead of the permanent magnets 56, 58. Through this control, the second internal cylinder 28 moves closer to the first internal cylinder 26. When the rotational speed of the first internal cylinder 26 becomes the same as that of the second internal cylinder 28, the first internal cylinder 26 and the second internal cylinder 28 are completely coupled together. At this moment, the current passing through the electromagnets 46 and 52 becomes almost zero.

When the first internal cylinder 26 and the second internal cylinder 28 are magnetically coupled, this information is transmitted from the controlling circuit 72 to the controlling circuit 78 to thereby increase the rotational speed of the motor 60 to the optimum speed of rotation of the turbo molecular pump portion 16. As a result, the degree of vacuum at the inlet port 12 is increased to a high vacuum level of $10^{-3}$ to $10^{-10}$ torr. Air-tightness between the upstream side and the downstream side of the second internal cylinder 28 is ensured by means of magnetic fluid sealing 104 as shown in Figure 1. The magnetic fluid sealing can also function as a damper at the moment when the rotor 28 is coupled to the rotor 26.

Air-tightness can also be ensured by forming the opposing surfaces of the tower 22 and the second internal cylinder 28 so as to obtain a labyrinth effect.

In the embodiment of the present invention described above, substantially only the centrifugal blade portion 20 functions at the start of the pump operation. Then, as the rotational speed of the rotor 28 increases, the stationary helical groove portion 18 starts functioning. When the degree of vacuum at the inlet port 12 is increased to an intermediate to high vacuum level ($10^{-3}$ torr), the second internal cylinder 28 and the first internal cylinder 26 are coupled together. The degree of vacuum at the inlet port 12 is increased by the pump operation of the rotor blades 27 of the rotor 26 to $10^{-10}$ torr. Since pumping from atmospheric pressure to an ultra high vacuum is possible by the use of one single pump, its installation space can be greatly reduced; and since it is perfectly oil-free, its maintenance, handling and operation can be simplified. In addition, since the operation of the turbo molecular pump portion 16 is started when the degree of vacuum reaches $10^{-3}$ torr, a large capacity is not required for the motor 60.

In the embodiment of the present invention described above, a first set of rotor blades 27 for producing ultra high vacua and a second set of rotor blades 34 for producing low to high vacua are coaxially provided. The first set of rotor blades 27 is disconnected from the second set of rotor blades 34 in a low vacuum range, and is drivingly connected thereto in an ultra high vacuum range. Because of this feature, the operation of the pump from a low vacuum range up to an ultra high vacuum range can be done by a single pump without having to increase the load of the motor 60, so that the area needed for pump installation is greatly reduced.

## Claims

1. A pump comprising a housing (10) within which a first rotor (26) and a second rotor (28) are rotatably mounted successively of each other so as to be adapted to effect successive pumping of a fluid, drive means (60) arranged to effect direct drive of one only (26) of the rotors (26, 28) and clutch means (42, 46, 56, 58) operable to effect and disconnect a drive connection between the rotors (26, 28), characterised in that the clutch means (42, 46, 56, 58) comprise mutually attracting magnetic means (56, 58) on the first and second rotors (26, 28) for magnetically coupling the rotors (26, 28), and electromagnets (42, 46) on the first and second rotors (26, 28), the electromagnets (42, 46), when energized, repelling each other so as to be adapted to de-activate the said magnetic coupling.

2. A pump as claimed in claim 1 characterised in that the pump is a vacuum pump in which, when the clutch means (42, 46, 56, 58) are engaged, the pump is operable to effect pumping to a higher degree of vacuum than when the clutch means (42, 46, 56, 58) are disengaged.

3. A pump as claimed in claim 1 or 2 characterised in that magnetic suspension means (38, 52, 54) are provided for magnetically suspending the first and second rotors (26, 28).

4. A pump as claimed in any preceding claim characterised in that the magnetic means (56, 58) comprise permanent magnets (56, 58) on adjacent parts of the first and second rotors (26, 28).

5. A pump as claimed in claim 4 characterised in that the permanent magnets (56, 58) are disc magnets having respectively adjacent faces with grooves therein.

6. A pump as claimed in any preceding claim characterised in that the magnetic means (56, 58) comprise electromagnets.

7. A pump as claimed in claim 3 or in any claim dependent thereon characterised in that the magnetic suspension means (37, 52, 54) comprise electromagnets (38, 42, 46, 52, 54) for positioning the rotors (26, 28) radially and axially, and position sensors (36, 40, 44, 48, 50) for sensing the axial and radial positions of the rotors (26, 28).

8. A pump as claimed in any preceding claim characterised in that a revolution sensor (62) is provided for detecting the rotational speed of the rotor (26) which is not directly driven by the drive means (60), control means (Figure 3) being provided for completely de-energizing the electromagnets (42, 46) when the said rotational speed is at a predetermined value.

9. A pump as claimed in any preceding claim characterised in that the housing (10) has a first set of stator blades (30) which are disposed alternately of rotor blades (27) of the first rotor (26); a second set of stator blades (32) which are disposed alternately of rotor blades (34) of the second rotor (28); and a helical stationary flow groove (29) on the inner surface of the housing (10) which is disposed between the first and second sets (30, 32) of stator blades.

## Patentansprüche

1. Pumpe mit einem Gehäuse (10), in dem ein erster Rotor (26) und ein zweiter Rotor (28) aufeinanderfolgend drehend so montiert sind, daß sie sich zum aufeinanderfolgenden Pumpen eines Strömungsmittels eignen, mit einer Antriebseinrichtung (60), die zum direkten Antrieb lediglich eines Rotors (26) der Rotoren (26, 28) vorgesehen ist, und mit einer Kupplungseinrichtung (42, 46, 56, 58), die zur Realisierung und zum Lösen einer Antriebsverbindung zwischen den Rotoren (26, 28) betätigbar ist, dadurch gekennzeichnet, daß die Kupplungseinrichtung (42, 46, 56, 58) wechselseitig anziehende magnetische Mittel (56, 58) auf dem ersten und zweiten Rotor (26, 28) zur magnetischen Kopplung der Rotoren (26, 28) sowie Elektromagnete (42, 46) auf dem ersten und zweiten Rotor (26, 28) umfaßt, und daß die Elektromagneten (42, 46) sich bei Erregung voneinander abstoßen, so daß sie sich zur Endaktivierung der magnetischen Kopplung eignen.

2. Pumpe nach Anspruch 1, dadurch gekennzeichnet, daß sie eine Vakuumpumpe ist, die bei in Eingriff stehender Kupplungseinrichtung (42, 46, 56, 58) im Vergleich zum Zustand bei ausgekuppelter Kupplungseinrichtung (42, 46, 56, 58) einen höheren Grad an Vakuum pumpt.

3. Pumpe nach Anspruch 1 oder 2, dadurch gekennzeichnet, daß eine magnetische Aufhängeeinrichtung (38, 52, 54) zur magnetischen Aufhängung des ersten und zweiten Rotors (26, 28) vorgesehen ist.

4. Pumpe nach den vorhergehenden Ansprüchen, dadurch gekennzeichnet, daß die magnetischen Mittel (56, 58) Permanentmagneten (56, 58) auf benachbarten Teilen des ersten und zweiten Rotors (26, 28) umfassen.

5. Pumpe nach Anspruch 4, dadurch gekennzeichnet, daß die Permanentmagneten (56, 58) Scheibenmagneten mit Nuten in benachbarten Flächen sind.

6. Pumpe nach den vorhergehenden Ansprüchen, dadurch gekennzeichnet, daß die magnetischen Mittel (56, 58) Elektromagneten umfassen.

7. Pumpe nach Anspruch 3 oder von diesem abhängigen Ansprüchen, dadurch gekennzeichnet, daß die magnetische Aufhängeeinrichtung (37, 52, 54) Elektromagneten (38, 42, 46, 52, 54) zur radialen und axialen Einstellung der Rotoren (26, 28) sowie Stellungssensoren (36, 40, 44, 48, 50) zur Erfassung der Axial- und Radialstellung der Rotoren (26, 28) umfaßt.

8. Pumpe nach den vorhergehenden Ansprüchen, dadurch gekennzeichnet, daß ein Umdrehungssensor (62) zur Detektierung der Drehzahl des Rotors (26), welcher durch die Antriebseinrichtung (60) nicht direkt angetrieben ist, vorgesehen ist, und daß eine Steueranordnung (Fig. 3) zur vollständigen Enderregung der Elektromagneten (42, 46) bei auf einem vorgegebenen Wert befindlicher Drehzahl vorgesehen ist.

9. Pumpe nach den vorhergehenden Ansprüchen, dadurch gekennzeichnet, daß das Gehäuse (10) einen ersten Satz von Statorblättern (30), welche mit Rotorblättern (27) des ersten Rotors (26) abwechselnd angeordnet sind, einen zweiten Satz von Statorblättern (32) welche abwechselnd mit Rotorblättern (34) des zweiten Rotors (28) angeordnet sind, sowie eine zwischen dem ersten und zweiten Satz (30, 32) von Statorblättern angeordnete schraubenförmige stationäre Strömungsnut (29) auf der Innenfläche des Gehäuses (10) besitzt.

## Revendications

1. Une pompe comprenant un corps (10) à l'intérieur duquel un premier rotor (26) et un second rotor (28) sont montés à la suite l'un de l'autre, de façon tournante, de manière à pouvoir pomper successivement un fluide, des moyens d'entraînement (60) conçus pour entraîner directement un seul (26) des rotors (26, 28), et des moyens d'embrayage (42, 46, 56, 58) capables d'établir et de supprimer un accouplement d'entraînement entre les rotors (26, 28), caractérisée en ce que les moyens d'embrayage (42, 46, 56, 58) comprennent des moyens magnétiques à attraction mutuelle (56, 58) sur les premier et second rotors (26, 28) pour accoupler magnétiquement les rotors (26, 28), et des électro-aimants (42, 46) sur les premier et second rotors (26, 28), les électro-aimants (42, 46) se repoussant mutuellement lorsqu'ils sont excités, de façon à pouvoir désactiver l'accouplement magnétique précité.

2. Une pompe selon la revendication 1, caractérisée en ce qu'elle consiste en une pompe à vide qui, lorsque les moyens d'embrayage (42, 46, 56, 58) sont embrayés, est capable d'effectuer un pompage jusqu'à un degré de vide plus élevé que lorsque les moyens d'embrayage (42, 46, 56, 58) sont débrayés.

3. Une pompe selon la revendication 1 ou 2, caractérisée en ce que des moyens de suspension magnétiques (38, 52, 54) sont prévus pour suspendre magnétiquement les premier et second rotors (26, 28).

4. Une pompe selon l'une quelconque des revendications précédentes, caractérisée en ce que les moyens magnétiques (56, 58) comprennent des aimants permanents (56, 58) sur des parties adjacentes du premier et second rotors (26, 28).

5. Une pompe selon la revendication 4, caractérisée en ce que les aimants permanents (56, 58) sont des disques magnétiques dont les faces respectivement adjacentes présentent des rainures.

6. Une pompe selon l'une quelconque des revendications précédentes, caractérisée en ce que les moyens magnétiques (56, 58) comprennent des électro-aimants.

7. Une pompe selon la revendication 3 ou l'une quelconque des revendications qui en dépendent, caractérisée en ce que les moyens de suspension magnétiques (37, 52, 54) comprennent des électro-aimants (38, 42, 46, 52, 54) pour positionner les rotors (26, 28) en direction radiale et en direction axiale, et des capteurs de position (36, 40, 44, 48, 50) pour détecter les positions axiale et radiale des rotors (26, 28).

8. Une pompe selon l'une quelconque des revendications précédentes, caractérisée en ce qu'un capteur de rotation (62) est incorporé dans le but de détecter la vitesse de rotation du rotor (26) qui n'est pas entraîné directement par les moyens d'entraînement (60), des moyens de commande (figure 3) étant prévus pour couper entièrement l'excitation des électro-aimants (42, 46) lorsque cette vitesse de rotation présente une valeur prédéterminée.

9. Une pompe selon l'une quelconque des revendications précédentes, caractérisée en ce que le corps (10) comporte un premier ensemble d'ailettes de stator (30) qui sont disposées en alternance avec des ailettes de rotor (27) du premier rotor (26); un second ensemble d'ailettes de stator (32) qui sont disposées en alternance avec des ailettes de rotor (34) du second rotor (28); et une rainure d'écoulement fixe (29), de forme hélicoïdale sur la surface intérieure du corps (10), qui est disposée entre les premier et second ensembles (30, 32) d'ailettes de stator.

FIG.1

# F I G. 2

# FIG.3

CURRENT SENSOR ~92

CURRENT SENSOR ~94

CURRENT SENSOR ~96

CURRENT SENSOR ~98

CURRENT SENSOR ~100

CURRENT SENSOR ~102

| 36 POSITION SENSOR | 68 CONTROLLING CIRCUIT | 80 DRIVER | 42 AXIAL DIRECTION ELECTROMAGNET |
| --- | --- | --- | --- |
| 40 POSITION SENSOR | 70 CONTROLLING CIRCUIT | 82 DRIVER | 38 RADIAL DIRECTION ELECTROMAGNET |
| 44 POSITION SENSOR | 72 CONTROLLING CIRCUIT | 84 DRIVER | 46 AXIAL DIRECTION ELECTROMAGNET |
| 48 POSITION SENSOR | 74 CONTROLLING CIRCUIT | 86 DRIVER | 52 RADIAL DIRECTION ELECTROMAGNET |
| 50 POSITION SENSOR | 76 CONTROLLING CIRCUIT | 88 DRIVER | 54 RADIAL DIRECTION ELECTROMAGNET |
| 62 REVOLUTION SENSOR | 78 CONTROLLING CIRCUIT | 90 DRIVER | 60 MOTOR |

EP 0 283 287 B1